# EUROPÄISCHE PATENTSCHRIFT

(11) **EP 2 585 733 B1**
(45) Veröffentlichungstag und Bekanntmachung des Hinweises auf die Patenterteilung: **20.01.2016**
(21) Anmeldenummer: 12702483.4
(22) Anmeldetag: 27.01.2012
(51) Int. Cl.: F16D 66/02

(54) **BREMSSCHEIBE UND VERFAHREN ZUR ÜBERPRÜFUNG DES VERSCHLEIßES EINER BREMSSCHEIBE**
BRAKE DISC AND METHOD FOR CHECKING THE WEAR OF A BRAKE DISC
DISQUE DE FREIN ET PROCÉDÉ DE CONTRÔLE DE L'USURE D'UN DISQUE DE FREIN

(30) Priorität: 01.02.2011 DE 102011000425
(43) Veröffentlichungstag der Anmeldung: 01.05.2013
(73) Patentinhaber: TMD Friction Services GmbH, 51381 Leverkusen (DE)
(72) Erfinder: LANGE, Jürgen, 50733 Köln (DE); SCHORN, Michael, 51375 Leverkusen (DE)
(74) Vertreter: Müller, Eckhard
(86) Internationale Anmeldenummer: PCT/EP2012/051316
(87) Internationale Veröffentlichungsnummer: WO 2012/104209

(56) Entgegenhaltungen:
- EP-A2- 1 063 442
- EP-B1- 1 108 918
- WO-A1-2006/081610
- CN-A- 1 995 904
- DE-A1- 2 827 411
- DE-C2- 2 749 772
- FR-A3- 2 434 365
- JP-A- 2008 144 869
- US-A- 1 248 340

## Beschreibung

Die Erfindung betrifft ein Verfahren zur Überprüfung des Verschleißes einer Bremsscheibe, die zumindest ein Sackloch aufweist, das innerhalb der Bremsscheibe in einem Abstand von einer Reibfläche endet, der kleiner oder gleich dem maximal zulässigen Verschleißabrieb der Reibfläche ist.

Die Erfindung betrifft außerdem eine Bremsscheibe mit einer ersten Reibfläche und mit einer zweiten Reibfläche, wobei die Bremsscheibe zumindest ein erstes Sackloch, insbesondere eine erste Sacklochbohrung aufweist, wobei das erste Sackloch von der ersten Reibfläche ausgeht und innerhalb der Bremsscheibe in einem vorgegebenen Abstand von der zweiten Reibfläche endet.

Die Erfindung betrifft außerdem Bremsanlage mit einer solchen Bremsscheibe und die Verwendung eines Prüfmittels zum Überprüfen des Bremsscheibenverschleißes einer solchen Bremsscheibe.

Aus EP 0 670 434 A1 ist eine Bremsscheibe für Scheibenbremsen von Fahrzeugen mit einander gegenüberliegenden, jeweils an einer ringförmigen Reibfläche der Bremsscheibe angreifenden Bremsklötzen bekannt. Um den Verschleißzustand der Bremsscheibe ohne Messgeräte visuell feststellen zu können, wird vorgeschlagen, dass in mindestens einer der beiden Reibflächen Vertiefungen mit einer dem maximal zulässigen Verschleiß der Reibfläche entsprechenden Tiefe ausgebildet sind.

Aus EP 1 108 918 B1 ist eine Bremsscheibe bekannt, die im Wesentlichen einen Bremsscheiben-Gusskörper aufweist. Der Bremsscheiben-Gusskörper hat einen ersten äußeren Abschnitt und einen axial entgegengesetzten weiteren äußeren Abschnitt, wobei diese äußeren Abschnitte jeweils eine äußere Bremsfläche und im Wesentlichen parallele innere Oberflächen haben. Die äußeren Bremsflächen sind für den Eingriff mit einem Paar entgegengesetzter Bremsreibbeläge vorgesehen, wobei bei der Verwendung die entgegengesetzten Bremsflächen einem im Wesentlichen konkaven Verschleiß unterliegen. Es ist eine vorbestimmte Vielzahl von Löchern in jeder der im Wesentlichen parallelen inneren Oberflächen der äußeren Abschnitte des Bremsscheibengusskörpers an verschiedenen vorbestimmten radialen Stellen von einer Mittelnabe des BremsscheibenGusskörpers hinter der äußeren Bremsfläche und mit verschiedenen vorbestimmten Tiefen und Abständen von der Bremsfläche vorgesehen, sodass die Löcher ursprünglich durch das Vorhandensein von Bremsscheibenmaterial unsichtbar sind, jedoch einzeln sichtbar werden können, wenn das Bremsscheibenmaterial sukzessive in konkaver Weise durch Bremsen abgenutzt wird. Hierdurch ist eine Anzeige des Ausmaßes und der Stellen des Verschleißes an den Bremsflächen der Bremsscheibe geschaffen.

Aus der DE 27 49 772 A1 ist eine Scheibenbremse bekannt, deren Reibflächen mit Vertiefungen versehen sind, und deren maximale Tiefe dem maximal zulässigen Verschleiß der Bremsscheiben entspricht. Sobald die Vertiefungen nicht mehr sichtbar sind, ist die maximal zulässige Verschleißgrenze erreicht. Die Bremsscheibe hat jedoch den Nachteil, dass der Verschleißzustand nur aufwändig kontrolliert werden kann, weil eine direkte Sichtkontrolle erfolgen muss. Dies ist bei eingebauter Bremsscheibe, insbesondere aufgrund beengter Platzverhältnisse und schwieriger Beleuchtung, problematisch.

Soweit bei den vorgenannten Bremsscheiben überhaupt eine Kontrolle des Verschleißzustandes, also nicht nur eine Kontrolle dahingehend, ob die maximal zulässige Verschleißgrenze erreicht ist, möglich ist, haben diese Bremsscheiben den Nachteil, dass der Bremsscheibenverschleiß ausschließlich mit Blickrichtung auf die zu untersuchende Bremsscheibenseite durch visuelle Kontrolle überwacht werden kann. Da der Bereich der eingebauten Bremsscheibe in aller Regel schlecht zugänglich und schlecht beleuchtet ist, kann es insbesondere bei der visuellen Kontrolle zu Fehlern kommen.

Aus DE 28 27 411 A1 ist eine Bremsscheibe, insbesondere für Fahrzeugscheibenbremsen, bekannt. Die Bremsscheibe weist in einer der Bremsfläche abgekehrten Seite eine Vertiefung auf, die sich in Richtung auf die Bremsfläche erstreckt und die in einem Abstand von der Bremsfläche endet, der dem maximal zulässigen Verschleiß der Bremsscheibe im Bereich der Bremsfläche entspricht. Sobald die maximal zulässige Verschleißgrenze erreicht ist, wird das Sackloch durchbrochen. Es ist ein Fühldorn vorgesehen, dessen Spitze durch ein Abdeckblech mit der Bremsfläche in Kontakt gebracht werden kann. Nach einem In-Kontakt-Bringen wird die Bremsscheibe gedreht, um festzustellen ob die Spitze des Fühldornes in das bei Überschreiten der maximal zulässigen Verschleißgrenze durchbrochene Sackloch einrastet oder nicht. Diese Vorrichtung erlaubt jedoch ausschließlich festzustellen, ob eine Bremsscheibe verschlissen ist oder nicht. Eine Aussage über einen Verschleißzustand der Bremsscheibe vor dem Erreichen der maximal zulässigen Verschleißgrenze ist nicht möglich.

JP 2008 144 869 A beschreibt eine Vorrichtung zur Detektion des Verschleißes einer Bremsscheibe mit einer Lichtquelle und einem Lichtempfänger, wobei das von der Lichtquelle ausgesandte Licht ausschließlich dann detektiert wird, wenn tatsächlich die Verschleißgrenze der Reibplatte erreicht ist. Demgemäß wird in der genannten Schrift nicht offenbart, dass die Dicke des Bremsscheibenmaterials zwischen dem Ende eines Sackloches und der Reibfläche ermittelt wird. Es wird lediglich detektiert, ob überhaupt noch Reibmaterial vorhanden ist, dessen Dicke wird jedoch nicht ermittelt.

In der WO 2006/081610 A1 wird ein Verschleißsensor mit einem Sensormittel offenbart, das dauerhaft in das zu untersuchende Werkstück eingesetzt wird. Hierzu sind spezielle Befestigungsmittel vorgesehen, die in eine spezielle Öffnung des Werkstückes eingeschraubt werden. Eine solche Vorrichtung ist zur Verschleißkontrolle einer sich im Fahrbetrieb drehenden Bremsscheibe ungeeignet. Die eingebauten Sensorteile würden eine störende Unwucht erzeugen und die offenbarte Kabelanbindung des Sensors ist bei einer sich drehenden Bremsscheibe in der Praxis ausgeschlossen.

Es ist die Aufgabe der vorliegenden Erfindung, ein Verfahren zur Überprüfung des Verschleißes einer Bremsscheibe, die zumindest ein Sackloch aufweist, anzugeben, das es ermöglicht, nicht nur das Vorliegen eines maximal zulässigen Verschleißes zu ermitteln, sondern das es ermöglicht, - insbesondere auch automatisch - zuverlässig einen aktuellen Verschleißzustand, der nicht notwendigerweise der maximal zulässige Verschleißzustand ist, festzustellen.

Diese Aufgabe wird durch ein Verfahren gelöst, das dadurch gekennzeichnet ist, dass die Dicke von Bremsscheiben Material zwischen dem Ende des Sacklochs und der Reibfläche ermittelt wird.

Es ist eine weitere Aufgabe der vorliegenden Erfindung, eine Bremsscheibe anzugeben, die es erlaubt, - insbesondere auch automatisch - zuverlässig einen aktuellen Verschleißzustand, der nicht notwendigerweise der maximal zulässige Verschleißzustand ist, festzustellen.

Diese Aufgabe wird durch eine Bremsscheibe gelöst, die dadurch gekennzeichnet ist, dass
a. von dem ersten Sackloch ein weiteres Sackloch oder ein Durchgangsloch ausgeht, das einen geringeren Durchmesser aufweist als das erste Sackloch, und das zu dem ersten Sackloch koaxial ist oder dass
b. von dem ersten Sackloch eine Kaskade von sich im Durchmesser verkleinernden Bohrungen ausgeht, die in dieselbe Richtung verlaufen, wie das erste Sackloch oder dass
c. von dem ersten Sackloch ein weiteres, sich konisch verjüngendes Durchgangsloch ausgeht, das zu dem ersten Sackloch koaxial ist.

Die Erfindung hat insbesondere den Vorteil, dass ein zuverlässigeres - vorzugsweise automatisches und/oder kontinuierliches - Überwachen des Bremsscheibenverschleißes ermöglicht ist.

In erfindungsgemäßer Weise wurde erkannt, dass eine besonders zuverlässige Überwachung des Bremsscheibenverschleißes dadurch erreicht werden kann, dass das Maß des Durchtritts von Strahlung durch das Sackloch und das noch nicht abgeriebene, an das Ende des Sacklochs angrenzende Bremsscheibenmaterial bzw. durch ein Durchgangsloch, das aus dem Sackloch durch verschleißbedingten Abrieb entstanden ist, gemessen wird.

Dieses Prinzip lässt sich an einem einfachen Ausführungsbeispiel leicht verdeutlichen: Bei einer vollkommen unverschlissenen erfindungsgemäßen Bremsscheibe befindet sich so viel Bremsscheibenmaterial über dem Sackloch, dass kein Licht, ausgehend von einer Seite der Bremsscheibe durch das Sackloch auf die andere Seite der Bremsscheibe treten kann. Bei zunehmendem Verschleiß wird die Bremsscheibenschicht über dem Sackloch zunehmend dünner, sodass es allmählich zu einem Durchscheinen von Licht kommt. Sobald die Bremsscheibenschicht die zulässige Verschleißgrenze erreicht hat, ist aus dem Sackloch ein Durchgangsloch geworden, sodass das Licht einer Lichtquelle, die sich auf einer Seite der Bremsscheibe befindet, auf der anderen Seite der Bremsscheibe leicht und zuverlässig wahrgenommen werden kann. Aber auch bereits vor dem Erreichen der maximal zulässigen Verschleißgrenze nimmt das Maß der hindurchtretenden Strahlung mit zunehmendem Verschleiß zu, so auch dann Aussagen über den Verschleißzustand möglich sind, wenn die maximal zuverlässige Verschleißgrenze noch nicht erreicht ist.

Ein solches Durchgangsmessverfahren - unabhängig davon, ob es rein visuell oder sensorgestützt erfolgt - ist wesentlich zuverlässiger, als ein Verfahren, bei dem die Bremsscheibe lediglich im Draufsichtverfahren kontrolliert werden kann. Vorzugsweise ist der Abstand des ersten Sacklochs von der zweiten Reibfläche kleiner oder gleich dem maximal zulässigen Verschleißabrieb der zweiten Reibfläche.

Bei einer ganz besonders vorteilhaften Ausführungsform weist die erfindungsgemäße Bremsscheibe zumindest ein zweites Sackloch, insbesondere eine zweite Sacklochbohrung, auf, das von der zweiten Reibfläche ausgeht und das innerhalb der Bremsscheibe in einem vorgegebenen Abstand von der ersten Reibfläche endet. Hierbei kann insbesondere vorgesehen sein, dass der Abstand des zweiten Sacklochs von der ersten Reibfläche kleiner oder gleich dem maximal zulässigen Verschleißabrieb der ersten Reibfläche ist.

Eine solche Ausführungsform hat den ganz besonderen Vorteil, dass der Bremsscheibenverschleiß der ersten Reibfläche vollkommen unabhängig vom Bremsscheibenverschleiß der zweiten Reibfläche überwacht werden kann. Da die Überwachung erfindungsgemäß im Durchgangsmessverfahren erfolgt - also durch Messung und/oder visuelle Überwachung von Strahlung, die von einer Seite der Bremsscheibe auf die andere Seite der Bremsscheibe tritt - ist es ermöglicht, eine Überwachung sowohl der ersten als auch der zweiten Reibfläche ausschließlich von einer Seite aus vornehmen zu können.

Es ist demgemäß nicht erforderlich, bei einer Bremsanlage, die mit der erfindungsgemäßen Bremsscheibe ausgerüstet ist, von beiden Seiten eine Bremsscheibenüberprüfung vorzunehmen und/oder auf beiden Seiten der Bremsscheibe Sensoren zur Erfassung des Bremsscheibenverschleißes anzuordnen. Vielmehr ist es ausreichend, lediglich von einer Seite aus eine visuelle Kontrolle vorzunehmen oder lediglich auf einer Seite der Bremsscheibe einen Sensor oder mehrere Sensoren anzuordnen. Dies funktioniert deshalb, weil es für die Messung bzw. Überwachung im Durchgangsverfahren keine Rolle spielt, ob die Strahlung, insbesondere das Licht, zunächst durch die Sacklochbohrung und anschließend durch den verschlissenen Bremsscheiben tritt oder umgekehrt.

Bei einer vorteilhaften Ausführung der erfindungsgemäßen Bremsscheibe sind das erste Sackloch und das zweite Sackloch nebeneinander und/oder radial voneinander beabstandet angeordnet. Insbesondere eine solche Anordnung ermöglicht die voneinander unabhängige Überwachung des Verschleißes beider Reibflächen von einer Seite der Bremsscheibe aus. Insbesondere ermöglicht eine solche Anordnung auch die simultane - vorzugsweise voneinander unabhängige - Überwachung und/oder Messung des Bremsscheibenverschleißes beider Reibflächen.

Die erfindungsgemäße Bremsscheibe kann in ihrem Inneren auch einen Hohlraum, beispielsweise einen Hohlraum zur Innenbelüftung, aufweisen. Bei einer solchen Ausführungsform ist erfindungsgemäß vorgesehen, dass das erste Sackloch und/oder das zweite Sackloch durch den Hohlraum hindurch verläuft.

Bei einer besonderen Ausführung ist vorgesehen, dass das erste Sackloch und das zweite Sackloch einen unterschiedlichen Radialabstand zur Drehachse der Bremsscheibe aufweisen.

Alternativ kann auch vorgesehen sein, was des ersten Sackloch und das zweite Sackloch denselben Radialabstand zur Drehachse der Bremsscheibe aufweisen. Diese Ausführungsform hat den besonderen Vorteil, dass der Verschleißzustand der ersten Reibfläche unter Verschleißzustand des zweiten Reibfläche mit ein und demselben Sensor überprüfbar ist. Dies kann beispielsweise in der Art erfolgen, dass zunächst das erste Sackloch durch Drehen der Bremsscheibe in das Messfeld des Sensors gedreht wird und zeitlich anschließend das zweite Sackloch durch Drehen der Bremsscheibe in das Messfeld des Sensors gedreht wird. Insbesondere ist es auch möglich, dass während des Betriebes bei jeder Radumdrehung jeweils abwechselnd der Verschleißzustand der ersten Reibfläche und der Verschleißzustand der zweiten Reibfläche kontinuierlich mithilfe des Sensors überwacht und/oder gemessen wird.

Natürlich ist es, wie bereits erwähnt, alternativ auch möglich mehrere Sensoren vorzusehen, wobei ein erster Sensor dazu ausgebildet und angeordnet ist, den Verschleißzustand der ersten Reibfläche zu überwachen, während ein zweiter Sensor dazu ausgebildet und angeordnet ist, den Verschleißzustand der zweiten Reibfläche zu überwachen.

Bei einer ganz besonders vorteilhaften Ausführungsform ist zusätzlich die Möglichkeit geschaffen, den Bremsscheibenverschleiß mittels einer Sonde zuverlässig abzutasten. Bei einer solchen Ausführungsform ist vorgesehen, dass von dem ersten Sackloch ein weiteres Sackloch oder ein Durchgangsloch ausgeht, das einen geringeren Durchmesser aufweist, als das erste Sackloch, und das zu dem ersten Sackloch koaxial ist. Analog kann zusätzlich vorgesehen sein, dass von dem zweiten Sackloch ein weiteres Sackloch oder ein Durchgangsloch ausgeht, das einen geringeren Durchmesser aufweist, als das zweite Sackloch, und das zu dem zweiten Sackloch koaxial ist.

Zur Bremsscheibenkontrolle kann bei der vorgenannten Ausführungsform ein im Querschnitt stufig profilierter Prüfdorn verwendet werden, wobei die Spitze des Prüfdorns hinsichtlich des Durchmessers derart ausgebildet ist, dass sie in das weitere Sackloch oder das Durchgangsloch einführbar ist. An die Spitze des Prüfdorns schließt sich ein im Durchmesser größerer Abtastbereich an, dessen Durchmesser so gestaltet ist, dass er in das erste Sackloch bzw. in das zweite Sackloch einführbar ist. Lässt sich lediglich die Spitze des Prüfdorns in eine Öffnung der Bremsscheibe einführen, so ist noch genügend Reibmaterial vorhanden. Wenn das Reibmaterial bis zum Ende des Sacklochs abgeschliffen ist und das Sackloch damit zu einem Durchgangsloch geworden ist, lässt sich der Prüfdorn weiter als zuvor in die Bremsscheibe einführen. Konkret dringt dann auch der im Durchmesser größere sich an die Spitze des Prüfdorns anschließende Bereich in die Bremsscheibe ein.

Bei einer anderen Ausführungsform, die im Wesentlichen ähnlich funktioniert, die jedoch präzisere Rückschlüsse auf den aktuellen Bremsscheibenverschleiß zulässt, ist vorgesehen, dass von dem ersten Sackloch eine Kaskade von sich im Durchmesser verkleinernden Bohrungen ausgeht, die in dieselbe Richtung verlaufen, wie das erste Sackloch. Analog kann zusätzlich vorgesehen sein, dass von dem zweiten Sackloch eine Kaskade von sich im Durchmesser verkleinernden Bohrungen ausgeht, die in dieselbe Richtung verlaufen, wie das erste Sackloch. Bei einer solchen Ausführungsform kann der Prüfdorn nicht nur zwei, sondern eine größere Zahl von im Durchmesser zunehmenden Prüfbereichen aufweisen. Insbesondere können diese Prüfbereiche farblich markiert sein, um dem Benutzer anzuzeigen, ob der Bremsscheibenverschleiß ein kleineres oder ein größeres Ausmaß hat.

Bei einer weiteren Ausführungsform, die im Wesentlichen ähnlich funktioniert, die jedoch kontinuierliche Rückschlüsse auf den Bremsscheibenverschleiß zulässt, ist vorgesehen, dass von dem ersten Sackloch ein weiteres, sich konisch verjüngendes Sackloch oder ein sich konisch verjüngendes Sackloch Durchgangsloch ausgeht, das zu dem ersten Sackloch koaxial ist. Alternativ oder zusätzlich kann auch vorgesehen sein, dass von dem zweiten Sackloch ein weiteres, sich konisch verjüngendes Sackloch oder ein Durchgangsloch ausgeht, das zu dem zweiten Sackloch koaxial ist. Bei einer solchen Ausführung kann eine noch genauere Prüfung des Bremsscheibenverschleißes erfolgen. Beispielsweise kann vorgesehen sein, dass auf dem Kegelmantel eines Prüfdornes eine Skala aufgebracht ist, an der direkt und weitgehend stufenlos das Verschleißmaß ermittelt werden kann.

Bei einer ganz besonders vorteilhaften Ausführungsform einer mit einer erfindungsgemäßen Bremsscheibe ausgerüsteten Bremsanlage ist vorgesehen, dass ein Sensor das Vorhandensein und/oder die Dicke von Bremsscheibenmaterial zwischen dem Ende des ersten Sacklochs und der zweiten Reibfläche ermittelt. Alternativ oder zusätzlich kann vorgesehen sein, dass ein Sensor das Vorhandensein und/oder die Dicke von Bremsscheibenmaterial zwischen dem Ende des zweiten Sacklochs und der ersten Reibfläche ermittelt.

Der Sensor ist bei einer besonderen Ausführungsform der erfindungsgemäßen Bremsanlage als optischer Sensor ausgebildet. Beispielsweise kann der Sensor als Fotozelle ausgebildet sein. Insbesondere kann vorgesehen sein, dass der Sensor auf einer Seite der Bremsscheibe angeordnet ist, während auf der anderen Seite der Bremsscheibe eine Lichtquelle vorgesehen ist, wobei der Sensor dazu ausgebildet ist, das Licht der Lichtquelle durch das Sackloch und - ausreichender Verschleiß vorausgesetzt - durch das Bremsscheibenmaterial bzw. durch das Durchgangsloch, das durch verschleißbedingten Abrieb aus dem Sackloch entstanden ist, zu empfangen.

Anstelle von Licht ist es auch möglich, eine andere Art von elektromagnetischer Strahlung zu verwenden.

Bei einer ganz besonders vorteilhaften Ausführungsform weist der Sensor eine Lichtschranke auf.

Bei einer besonderen Ausführungsform tastet der Sensor die Oberfläche der ersten Reibfläche und/oder der zweiten Reibfläche mechanisch und/oder kapazitiv und/oder induktiv ab.

Bei einer ganz besonders vorteilhaften Ausführungsform einer erfindungsgemäßen Bremsanlage ist der Sensor in ein System zur Überwachung eines Bremsbelagverschleißes integriert und/oder an ein System zur Überwachung eines Bremsbelagverschleißes angeschlossen. Insbesondere kann vorgesehen sein, dass der Sensor und ein System zur Überwachung eines Bremsbelagverschleißes dieselbe Warnleitung benutzen und/oder derselben Warnleitung zugeordnet sind. Eine solche Ausführungsform hat den Vorteil, dass in einem Fahrzeug nur eine einzige Warnleitung verlegt werden muss, die sowohl von dem Sensor als auch von dem System zur Überwachung eines Bremsbelagverschleißes benutzt wird.

In vorteilhafter Weise kann erfindungsgemäß auch vorgesehen sein, dass der Sensor und/oder ein System zur Überwachung eines Bremsscheibenverschleißes in ein System zur Überwachung eines Bremsbelagverschleißes integriert sind. Alternativ kann auch vorgesehen sein, dass der Sensor und/oder ein System zur Überwachung eines Bremsscheibenverschleißes an ein System zur Überwachung eines Bremsbelagverschleißes angeschlossen sind. Insbesondere kann vorteilhaft vorgesehen sein, dass der Sensor und/oder ein System zur Überwachung eines Bremsscheibenverschleißes dieselbe Warnleitung benutzen, wie ein System zur Überwachung eines Bremsbelagverschleißes.

Die Erfindung hat den ganz besonderen Vorteil, dass - insbesondere bei einer Ausführung im Durchgangsmessverfahren - auch eine Überwachung des Bremsscheibenverschleißes bei sich drehender Bremsscheibe - insbesondere im Fahrbetrieb eines Fahrzeugs, in dem die erfindungsgemäße Bremsscheibe eingebaut ist - erfolgen kann. Hier kann - wie bereits erläutert - der Bremsscheibenverschleiß der beiden Reibflächen unabhängig voneinander gemessen und/oder überwacht werden.

Bei einer ganz besonders vorteilhaften Ausführungsform ist vorgesehen, dass der Sensor automatisch arbeitet und/oder eine Überwachung automatisch erfolgt.

Bei einer vorteilhaften Ausführungsform erfolgt die Verschleißüberwachung kontinuierlich, es ist jedoch erfindungsgemäß auch möglich, dass die Verschleißüberwachung in vorgegebenen oder vorgebbaren Zeitintervallen erfolgt. Als Prüfmittel zum Überprüfen des Bremsscheibenverschleißes einer erfindungsgemäßen Bremsscheibe kann erfindungsgemäß beispielsweise ein Prüfdorn mit einer Prüfspitze dienen. Je nach Ausführung der Bremsscheibe kann die Prüfspitze beispielsweise kegelförmig ausgebildet sein und/oder mehrere im Durchmesser absteigend angeordnete Prüfbereiche aufweisen. Insbesondere kann das Prüfmittel dazu ausgebildet und bestimmt sein, bei ruhender Bremsscheibe, insbesondere während einer Fahrzeugüberprüfung, eingesetzt zu werden.

Bei einer besonderen Ausführung ist vorgesehen, das Prüfmittel bei ruhender Bremsscheibe, insbesondere während einer Fahrzeugüberprüfung, in das erste Sackloch und/oder das weitere Sackloch und/oder das Durchgangsloch und/oder die Kaskade von Bohrungen einzusetzen. Insbesondere kann vorgesehen sein, das Prüfmittel auf Anschlag in das erste Sackloch und/oder das weitere Sackloch und/oder das Durchgangsloch und/oder die Kaskade von Bohrungen einzusetzen, um anhand der Eindringtiefe Rückschlüsse auf den Verschleißzustand der jeweiligen Reibfläche zu schließen. Hierzu kann das Prüfmittel vorteilhaft wenigstens eine Markierung aufweisen, an der die Eindringtiefe als Maß für den Verschleiß ablesbar ist. Die Markierung kann beispielsweise als Farbmarkierung ausgebildet sein. Beispielsweise ist es möglich, die Markierung durch nebeneinanderliegende farblich unterschiedliche Ringe auszubilden. Alternativ oder zusätzlich kann die Markierung auch eine Skala aufweisen.

Besonders vorteilhaft ist ein System, das aus einer Bremsscheibe mit einer Öffnung, insbesondere einem Sackloch, einem Durchgangsloch, einem sich konisch verjüngenden Sackloch, einem sich konisch verjüngenden Durchgangsloch, einer Kaskade von Bohrungen, und aus einem in die Öffnung einführbaren Prüfmittel besteht, wobei das Prüfmittel - insbesondere jeweils von der der zu überwachenden Reibfläche abgewandten Seite der Bremsscheibe aus-in Abhängigkeit vom Verschleißzustand der Bremsscheibe bis zum Anschlag unterschiedlich tief in die Öffnung einführbar ist. Alternativ oder zusätzlich kann vorgesehen sein, dass das Prüfmittel - insbesondere jeweils von der der zu überwachenden Reibfläche abgewandten Seite der Bremsscheibe aus - mit fortschreitendem Verschleiß tiefer bis zum Anschlag in die Öffnung einführbar ist.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: eine erfindungsgemäße Bremsscheibe mit einem Sensor zur Überwachung des Verschleißabriebs,
- Fig. 2: eine andere erfindungsgemäße innenbelüftete Bremsscheibe mit Sensoren zur Überwachung des Verschleißabriebs und
- Fig. 3: eine weitere erfindungsgemäße innenbelüftete Bremsscheibe.
- Fig. 4: eine anders ausgeführte erfindungsgemäße innenbelüftete Bremsscheibe.

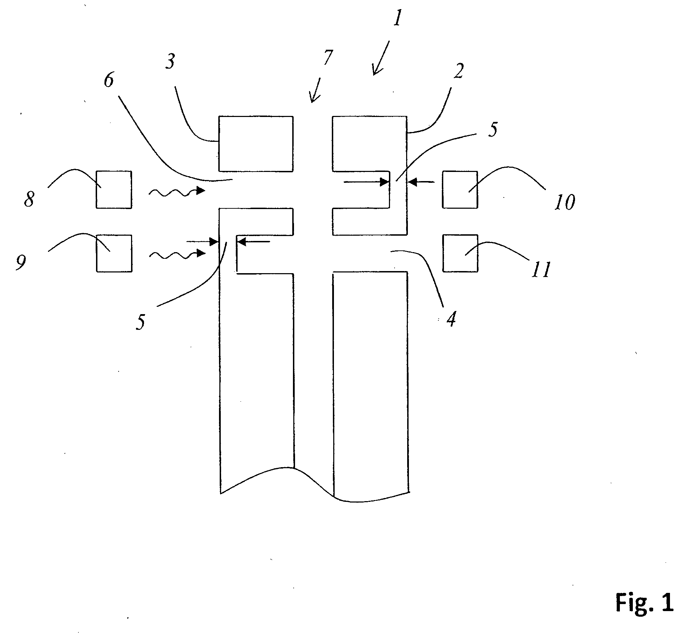

Fig. 1 zeigt eine erfindungsgemäße Bremsscheibe 1 mit einer ersten Reibfläche 2 und einer zweiten Reibfläche 3. Die Bremsscheibe 1 weist ein erstes Sackloch 4 auf, das von der ersten Reibfläche 2 ausgeht und innerhalb der Bremsscheibe 1 in einem vorgegebenen Abstand 5 von der zweiten Reibfläche 3 endet. Darüber hinaus weist die Bremsscheibe 1 ein zweites Sackloch 6 auf, das von der zweiten Reibfläche 3 ausgeht und das innerhalb der Bremsscheibe 1 in einem vorgegebenen Abstand 5 von der ersten Reibfläche 2 endet. Die Bremsscheibe weist einen Hohlraum 7 zur Innenbelüftung auf. Die Sacklöcher 4, 6 verlaufen - in einer gedachten Fortsetzung - durch den Hohlraum 7 hindurch.

Es ist eine erste Strahlungsquelle 8, die beispielsweise als LED-Lampe ausgeführt sein kann, vorgesehen, die der zweiten Reibfläche 3 zugewandt ist. Darüber hinaus ist eine zweite Strahlungsquelle 9, die ebenfalls als LED-Lampe ausgeführt sein kann, vorgesehen, die der ersten Reibfläche 2 zugeordnet ist. Die erste Strahlungsquelle 8 ist in radialer Richtung auf der Höhe des zweiten Sacklochs angeordnet, während die zweite Strahlungsquelle 9 in radialer Richtung auf der Höhe des ersten Sacklochs 4 angeordnet ist. Es ist ein erster Sensor 10 vorgesehen, der derart ausgebildet und angeordnet ist, dass er Strahlung, die durch das zweite Sackloch und das (ausreichend durch Abrieb verdünnte) Bremsscheibenmaterial der ersten Reibfläche 2 hindurch tritt, empfängt. Analog ist ein weiterer Sensor 11 vorgesehen, der dazu ausgebildet ist, durch das erste Sackloch und durch die zweite Reibfläche tretende Strahlung zu empfangen.

Diese Ausführung hat den besonderen Vorteil, dass die Sensoren ausschließlich auf einer Seite der Bremsscheibe 1 angeordnet sind. Es wäre vorliegend durchaus auch möglich, statt der beiden Strahlungsquellen 8, 9 eine einzige Strahlungsquelle zu verwenden.

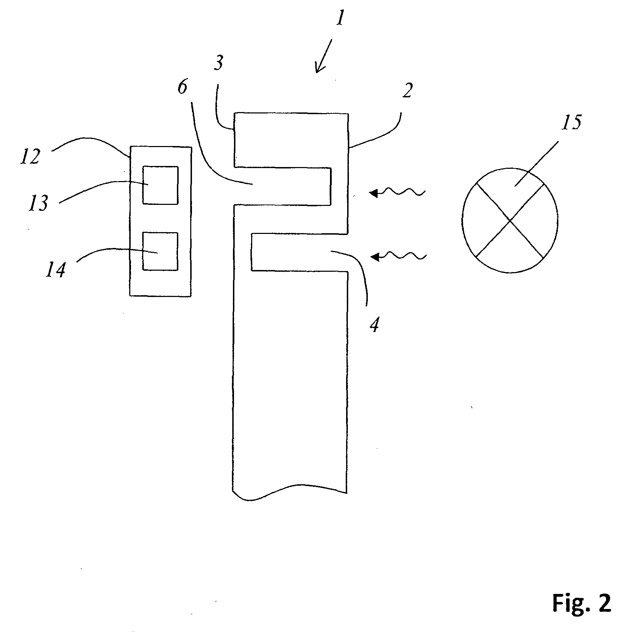

Fig. 2 zeigt eine andere erfindungsgemäße Bremsscheibe 1 ohne Innenbelüftung, die ebenfalls radial voneinander beabstandet ein erstes Sackloch 4 und ein zweites Sackloch 6 aufweist. Es ist ein Sensor 12 vorgesehen, der zwei Einzelsensoren 13, 14 aufweist. Der Sensor kann beispielsweise mehrere Fotozellen beinhalten. Auf der dem Sensor 12 gegenüberliegenden Seite der Bremsscheibe 1 ist eine Lichtquelle 15 angeordnet. Der erste Einzelsensor 13 ist dazu ausgebildet, den Verschleiß der ersten Reibfläche 2 zu detektieren, während der zweite Einzelsensor 14 dazu ausgebildet ist, den Verschleiß der zweiten Reibfläche 3 zu detektieren.

Wie auch bei der in Fig. 1 dargestellten Ausführungsform nimmt das Maß der von dem Sensor 12 empfangenen (Licht-)Strahlung in dem Maße zu, wie der Verschleiß der Reibflächen zunimmt. Mit anderen Worten, je dünner das an die Enden der Sacklöcher 4, 6 angrenzende Bremsscheibenmaterial wird, umso mehr Strahlung kann diesen Bereich durchdringen und umso mehr Strahlung wird von dem Sensor 12 empfangen.

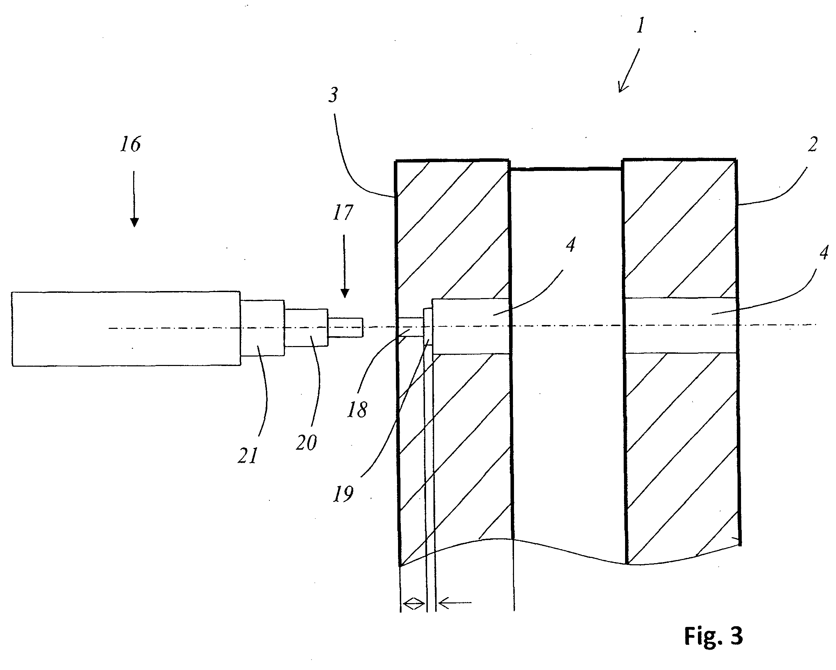

Fig. 3 illustriert, wie alternativ oder zusätzlich zu einer Durchgangsmessung eine Messung des Bremsscheibenverschleißes mittels eines Prüfdorns 16 vor sich gehen kann. Der Prüfdorn 16 weist eine Prüfspitze 17 auf, die in eine von einem Sackloch 4 ausgehende Durchgangsbohrung 18 einführbar ist. Bei einer vollkommen unverschlissenen Bremsscheibe ist ausschließlich diese Prüfspitze 17 in die Bremsscheibe 1 einführbar. Von dem Sackloch 4 geht ein weiteres Sackloch 19 aus, das hinsichtlich seines Durchmessers mit einem an die Prüfspitze 17 des Prüfdorns 16 angrenzenden weiteren Prüfbereichs 20 korrespondiert. Bei fortschreitendem Verschleiß der Bremsscheibe ist nicht nur die Prüfspitze 17 des Prüfdorns 16 in die Bremsscheibe einführbar, sondern auch der an die Prüfspitze 17 angrenzende weitere Prüfbereich 20. Sobald auch der Bereich der Bremsscheibe durch Verschleiß abgeschliffen ist, in dem sich das weitere Sackloch 19 befunden hat, lässt sich ein dritter Prüfbereich 21 des Prüfdorns 16, der einen größeren Durchmesser als der weitere Prüfbereich 20 aufweist, in die Bremsscheibe einführen. Sobald dieser Fall vorliegt, ist die Bremsscheibe verschlissen und muss ausgetauscht werden.

Die Spitze 17 und die unterschiedlichen Bereiche 20, 21 des Prüfdorns 16 können farblich markiert sein, um dem Benutzer - beispielsweise in einer Grüngelbrot-Darstellung einen Hinweis auf den Verschleißzustand zu geben.

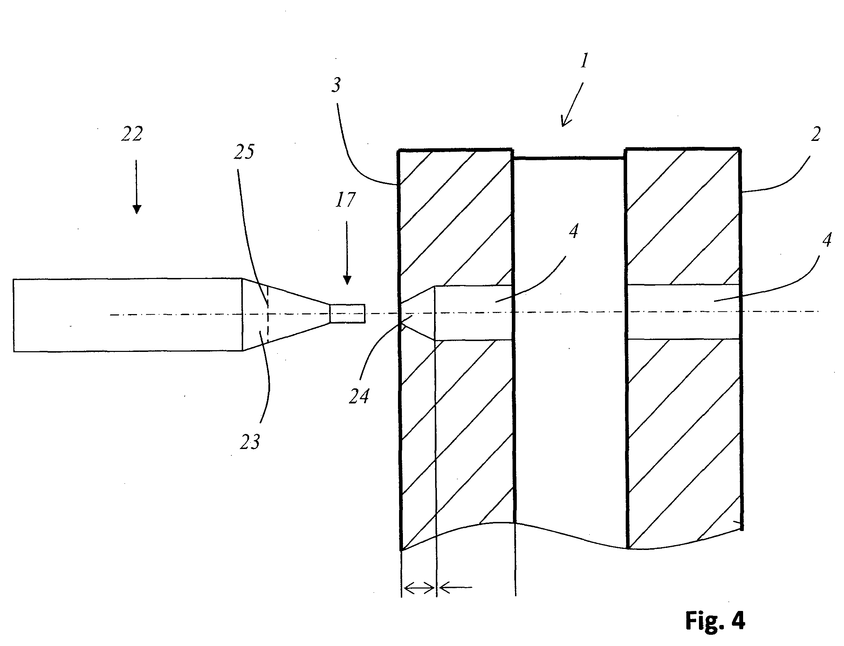

Fig. 4 zeigt eine Bremsscheibe 1, bei der von dem ersten Sackloch 4 ein weiteres, sich konisch verjüngendes Durchgangsloch 24 ausgeht. Fig. 4 illustriert, wie bei dieser Ausführung alternativ oder zusätzlich zu einer Durchgangsmessung eine Messung des Bremsscheibenverschleißes mittels eines anderen Prüfdorns 22 vor sich gehen kann.

Der andere Prüfdorn 22 weist eine Prüfspitze 17 auf, die in das sich konisch verjüngendes Durchgangsloch 24 einführbar ist. Bei einer vollkommen unverschlissenen Bremsscheibe ist ausschließlich die Prüfspitze 17 in die Bremsscheibe 1 einführbar. Bei fortschreitendem Verschleiß der Bremsscheibe ist nicht nur die Prüfspitze 17 des Prüfdorns 22 in die Bremsscheibe einführbar, sondern auch der an die Prüfspitze 17 angrenzende kegelförmiger Prüfbereich 23. Sobald auch der Bereich der Bremsscheibe durch Verschleiß abgeschliffen ist, in dem sich das sich konisch verjüngende Durchgangsloch 24 befunden hat, lässt sich der kegelförmige Prüfbereich 23 des Prüfdorns 22 bis an eine Markierung 25 einführen, die das Erreichen der Verschleißgrenze anzeigt. Sobald dieser Fall vorliegt, ist die Bremsscheibe 1 verschlissen und muss ausgetauscht werden.

Die Spitze 17 und der kegelförmige Prüfbereich 23 des Prüfdorns 16 können skaliert sein, um dem Benutzer - beispielsweise in einer Prozent-Darstellung einen Hinweis auf den Verschleißzustand zu geben.

### Bezugszeichenliste

- 1: Bremsscheibe
- 2: Erste Reibfläche
- 3: Zweite Reibfläche
- 4: Erstes Sackloch
- 5: Abstand (Maximal zulässiger Verschleißabrieb)
- 6: Zweites Sackloch
- 7: Hohlraum
- 8: Erste Strahlungsquelle
- 9: Zweite Strahlungsquelle
- 10: Erster Sensor
- 11: Zweiter Sensor
- 12: Sensor
- 13: erster Einzelsensor
- 14: zweiter Einzelsensor
- 15: Lichtquelle
- 16: Prüfdorn
- 17: Prüfspitze
- 18: Durchgangsbohrung
- 19: Weiteres Sackloch
- 20: Weiterer Prüfbereich
- 21: Dritter Prüfbereich
- 22: Anderer Prüfdorn
- 23: Kegelförmiger Prüfbereich
- 24: Sich konisch verjüngendes Durchgangsloch 24
- 25: Markierung für Verschleißgrenze

## Patentansprüche

1. Verfahren zur Überprüfung des Verschleißes einer Bremsscheibe (1), die zumindest ein Sackloch (4, 6) aufweist, das innerhalb der Bremsscheibe (1) in einem Abstand von einer Reibfläche (2, 3) endet, der kleiner oder gleich dem maximal zulässigen Verschleißabrieb der Reibfläche (2, 3) ist, **dadurch gekennzeichnet, dass** die Dicke von Bremsscheibenmaterial zwischen dem Ende des Sacklochs (4, 6) und der Reibfläche (2, 3) ermittelt wird.

2. Verfahren nach Anspruch 1, **dadurch gekennzeichnet, dass** das Maß des Durchtritts von Strahlung, insbesondere von elektromagnetischer Strahlung, insbesondere von Licht, durch das Sackloch (4, 6) und das Bremsscheibenmaterial zwischen dem Ende des Sacklochs (4, 6) und der Reibfläche (2, 3) bzw. durch ein Durchgangsloch, das aus dem Sackloch (4, 6) durch verschleißbedingtem Abrieb entstanden ist, gemessen wird.

3. Verfahren nach einem der Ansprüche 1 oder 2, **dadurch gekennzeichnet, dass**
a. die Dicke von Bremsscheibenmaterial und/oder das Maß des Durchtritts von Strahlung mit einem Sensor gemessen wird und/oder dass
b. Dicke von Bremsscheibenmaterial und/oder das Maß des Durchtritts von Strahlung mit einem Sensor gemessen wird, wobei der Sensor (12) automatisch und/oder kontinuierlich und/oder in vorgebebenen oder vorgebaren Zeitintervallen arbeitet und/oder aktiviert wird und/oder dass
c. die Dicke von Bremsscheibenmaterial und/oder das Maß des Durchtritts von Strahlung mit einem Sensor gemessen wird, wobei der Sensor (12) bei sich drehender Bremsscheibe (1), insbesondere im Fahrbetrieb eines mit der Bremsscheibe (1) ausgerüsteten Kraftfahrzeuges, arbeitet und/oder aktiviert wird.

4. Bremsscheibe (1) mit einer ersten Reibfläche (2) und mit einer zweiten Reibfläche (3), wobei die Bremsscheibe (1) zumindest ein erstes Sackloch (4), insbesondere eine erste Sacklochbohrung aufweist, wobei das erste Sackloch von der ersten Reibfläche ausgeht und innerhalb der Bremsscheibe in einem vorgegebenen Abstand von der zweiten Reibfläche endet, wobei der Abstand des ersten Sacklochs (4) von der zweiten Reibfläche (3) kleiner oder gleich dem maximal zulässigen Verschleißabrieb der zweiten Reibfläche (3) ist, **dadurch gekennzeichnet, dass**
a. von dem ersten Sackloch (4) ein weiteres Sackloch oder ein Durchgangsloch ausgeht, das einen geringeren Durchmesser aufweist als das erste Sackloch, und das zu dem ersten Sackloch koaxial ist oder dass
b. von dem ersten Sackloch (4) eine Kaskade von sich im Durchmesser verkleinernden Bohrungen ausgeht, die in dieselbe Richtung verlaufen, wie das erste Sackloch (4) oder dass
c. von dem ersten Sackloch (4) ein weiteres, sich konisch verjüngendes Durchgangsloch ausgeht, das zu dem ersten Sackloch koaxial ist.

5. Bremsscheibe (1) nach einem der Anspruch 4, **dadurch gekennzeichnet, dass**
a. die Bremsscheibe (1) zumindest ein zweites Sackloch (6), insbesondere eine zweite Sacklochbohrung, aufweist, das von der zweiten Reibfläche (3) ausgeht und das innerhalb der Bremsscheibe (1) in einem vorgegebenen Abstand von der ersten Reibfläche (2) endet oder dass
b. die Bremsscheibe (1) zumindest ein zweites Sackloch (6), insbesondere eine zweite Sacklochbohrung, aufweist, das von der zweiten Reibfläche (3) ausgeht und das innerhalb der Bremsscheibe (1) in einem vorgegebenen Abstand von der ersten Reibfläche (2) endet, wobei der Abstand des zweiten Sacklochs (6) von der ersten Reibfläche (2) kleiner oder gleich dem maximal zulässigen Verschleißabrieb der ersten Reibfläche (2) ist.

6. Bremsscheibe (1) nach Anspruch 5, **dadurch gekennzeichnet, dass**
a. von dem zweiten Sackloch (6) ein weiteres zweites Sackloch oder ein zweites Durchgangsloch ausgeht, das einen geringeren Durchmesser aufweist als das zweite Sackloch, und das zu dem zweiten Sackloch koaxial ist oder dass
b. von dem zweiten Sackloch (6) eine Kaskade von sich im Durchmesser verkleinernden zweiter Bohrungen ausgeht, die in dieselbe Richtung verlaufen, wie das zweite Sackloch (4) oder dass
c. von dem zweiten Sackloch (6) ein weiteres, sich konisch verjüngendes zweites Durchgangsloch oder ein weiteres, sich konisch verjüngendes zweites Sackloch ausgeht, das zu dem zweiten Sackloch koaxial ist.

7. Bremsscheibe (1) nach einem der Ansprüche 5 oder 6, **dadurch gekennzeichnet, dass**
a. das erste Sackloch (4) und das zweite Sackloch (6) einen unterschiedlichen Radialabstand zur Drehachse der Bremsscheibe aufweisen oder dass
b. das erste Sackloch (4) und das zweite Sackloch (6) denselben Radialabstand zur Drehachse der Bremsscheibe aufweisen.

8. Bremsscheibe (1) nach einem der Ansprüche 4 bis 7, **dadurch gekennzeichnet, dass** die Bremsscheibe (1) im Inneren zumindest einen Hohlraum (7), insbesondere einen Hohlraum zur Innenbelüftung, aufweist und dass das erste Sackloch (4) und/oder das zweite Sackloch (6) durch den Hohlraum (7) hindurch verläuft.

9. Bremsanlage mit einer Bremsscheibe (1) nach einem der Ansprüche 4 bis 8, wobei ein Sensor (12) vorgesehen ist, der die Dicke von Bremsscheibenmaterial zwischen dem Ende des ersten Sacklochs (4) und der zweiten Reibfläche (3) ermittelt und/oder ein Sensor (12) vorgesehen ist, der die Dicke von Bremsscheibenmaterial zwischen dem Ende des zweiten Sacklochs (6) und der ersten Reibfläche (2) ermittelt.

10. Bremsanlage nach Anspruch 9, **dadurch gekennzeichnet, dass**
a. der Sensor (12) ein optischer Sensor ist und/oder dass
b. der Sensor eine Lichtschranke aufweist und/oder dass
c. der Sensor (12) das Maß des Durchtritts von Strahlung, insbesondere von elektromagnetischer Strahlung, insbesondere von Licht, durch das erste Sackloch (4) und das Bremsscheibenmaterial zwischen dem Ende des ersten Sacklochs (4) und der zweiten Reibfläche (3) bzw. durch ein erstes Durchgangsloch, das aus dem ersten Sackloch durch verschleißbedingtem Abrieb entstanden ist, misst und/oder dass
d. der Sensor (12) das Maß des Durchtritts von Strahlung, insbesondere von elektromagnetischer Strahlung, insbesondere von Licht, durch das zweite Sackloch (6) und das Bremsscheibenmaterial zwischen dem Ende des zweiten Sacklochs (6) und der ersten Reibfläche (2) bzw. durch ein zweites Durchgangsloch, das aus dem zweiten Sackloch (6) durch verschleißbedingtem Abrieb entstanden ist, misst oder dass
e. der Sensor (12) die Oberfläche der ersten Reibfläche (2) oder der zweiten Reibfläche (3) mechanisch, kapazitiv oder induktiv abtastet.

11. Bremsanlage nach einem der Ansprüche 9 oder 10, **dadurch gekennzeichnet, dass**
a. der Sensor (12) in ein System zur Überwachung eines Bremsscheibenverschleißes integriert ist und/oder an ein System zur Überwachung eines Bremsscheibenverschleißes angeschlossen ist und/oder dass
b. der Sensor (12) und ein System zur Überwachung eines Bremsscheibenverschleißes dieselbe Warnleitung benutzen und/oder derselben Warnleitung zugeordnet sind.

12. Bremsanlage nach einem der Ansprüche 9 bis 11, **dadurch gekennzeichnet, dass**
a. der Sensor (12) und/oder ein System zur Überwachung eines Bremsscheibenverschleißes in ein System zur Überwachung eines Bremsbelagverschleißes integriert sind und/oder
b. dass der Sensor (12) und/oder ein System zur Überwachung eines Bremsscheibenverschleißes an ein System zur Überwachung eines Bremsbelagverschleißes angeschlossen sind und/oder dass
c. der Sensor (12) und/oder ein System zur Überwachung eines Bremsscheibenverschleißes dieselbe Warnleitung benutzen, wie ein System zur Überwachung eines Bremsbelagverschleißes.

13. Verwendung eines Prüfmittels zum Überprüfen des Bremsscheibenverschleißes einer Bremsscheibe nach einem der Ansprüche 4 bis 8, wobei das Prüfmittel dazu ausgebildet und bestimmt ist, bei ruhender Bremsscheibe (1), insbesondere während einer Fahrzeugüberprüfung, auf Anschlag in das erste Sackloch und/oder das weitere Sackloch und/oder das Durchgangsloch und/oder die Kaskade von Bohrungen eingesetzt zu werden, wobei das Prüfmittel wenigstens eine Markierung, insbesondere einer Farbmarkierung und/oder eines Skala, aufweist, an der die Eindringtiefe als Maß für den Verschleiß ablesbar ist..

14. Verwendung nach Anspruch 13, **dadurch gekennzeichnet, dass**
a. das Prüfmittel als Prüfdorn (16) mit einer Prüfspitze ausgebildet ist und/oder dass
b. das Prüfmittel als Prüfdorn (16) mit einer kegelförmigen Prüfspitze ausgebildet ist und/oder dass
c. das Prüfmittel als Prüfdorn (16) mit einer Prüfspitze ausgebildet ist, die zum freien Ende hin im Durchmesser absteigende Prüfbereiche aufweist.

15. System bestehend aus einer Bremsscheibe (1) mit einer Öffnung nach einem der Ansprüche 4 bis 8 und aus einem in die Öffnung einführbaren, zur Verwendung nach Anspruch 13 oder 14 geeigeten Prüfmittel, das in Abhängigkeit vom Verschleißzustand der Bremsscheibe (1) bis zum Anschlag unterschiedlich tief in die Öffnung einführbar ist.

## Claims

1. Method for checking the wear of a brake disc (1) that has at least one blind hole (4, 6) which ends inside the brake disc (1) at a distance from the friction surface (2,3) that is smaller or equal to the maximum permissible wear abrasion of the friction surface (2, 3), **characterized in that** the thickness of the brake disc material is determined between the end of the blind hole (4, 6) and the friction surface (2, 3).

2. Method according to claim 1, **characterized in that** the amount of radiation, in particular of electromagnetic radiation, in particular of light, that is passing through the blind hole (4, 6) and the brake disc material between the end of the blind hole (4, 6) and the friction surface (2, 3), or through a clearance hole that has been formed from the blind hole (4, 6) due to wear abrasion, is measured.

3. Method according to one of the claims 1 or 2, **characterized in that**
a. the thickness of the brake disc material and/or the amount of passing radiation is measured by means of a sensor, and/or that
b. the thickness of the brake disc material and/or the amount of passing radiation is measured by means of a sensor, wherein the sensor (12) functions and/or is activated automatically and/or continuously and/or in predetermined or predeterminable time intervals, and/or that
c. the thickness of the brake disc material and/or the amount of the passing radiation is measured by means of a sensor, wherein the sensor (12) functions and/or is activated while the brake disc is rotating (1), in particular during the driving operation of a motor vehicle that is equipped with the brake disc (1).

4. Brake disc (1), having a first friction surface (2) and a second friction surface (3), wherein the brake disc (1) has at least one first blind hole (4), in particular a first blind hole bore, wherein the first blind hole begins at the first friction surface and ends inside the brake disc at a predetermined distance to the second friction surface, wherein the distance of the first blind hole (4) to the second friction surface (3) is smaller or equal to the maximal permissible wear abrasion of the second friction surface (3), **characterized in that**
a. extending from the first blind hole (4) is another blind hole or clearance hole that has a smaller diameter than the first blind hole and that is coaxial with respect to the first blind hole, or that
b. extending from the first blind hole (4) is a cascade of bores that decrease in diameter and extend in the same direction as the first blind hole (4), or that
c. extending from the first blind hole (4) is a further, conically tapering clearance hole that is coaxial with respect to the first blind hole.

5. Brake disc (1) according to claim 4, **characterized in that**
a. the brake disc (1) has at least one second blind hole (6), in particular a second blind hole bore, that starts at the second friction surface (3) and ends inside the brake disc (1) at a predetermined distance from the first friction surface (2), or that
b. the brake disc (1) has at least one second blind hole (6), in particular a second blind hole bore, that starts at the second friction surface (3) and ends inside the brake disc (1) at a predetermined distance from the first friction surface (2), wherein the distance of the second blind hole (6) to the first friction surface (2) is smaller or equal to the maximal permissible wear abrasion of the first friction surface (2).

6. Brake disc (1) according to claim 5, **characterized in that**
a. extending from the second blind hole (4) is a further, second blind hole or a second clearance hole that has a smaller diameter than the second blind hole and that is coaxial with respect to the second blind hole, or that
b. extending from the second blind hole (4) is a cascade of second bores that decrease in diameter and extend in the same direction as the second blind hole (4), or that
c. extending from the second blind hole (6) is a further, conically tapering second clearance hole or a further, conically tapering second blind hole that is coaxial with respect to the second blind hole.

7. Brake disc (1) according to one of the claims 5 or 6, **characterized in that**
a. the first blind hole (4) and the second blind hole (6) have different radial distances to the rotational axis of the brake disc, or that
b. the first blind hole (4) and the second blind hole (6) have the same radial distance to the rotational axis of the brake disc.

8. Brake disc (1) according to one of the claims 4 to 7, **characterized in that** in its interior the brake disc (1) has at least one hollow space (7), in particular a hollow space for internal ventilation, and that the first blind hole (4) and/or the second blind hole (6) extend through the hollow space (7).

9. Brake system, having a brake disc (1) according to one of the claims 4 to 8, wherein a sensor (12) is provided which determines the thickness of the brake disc material between the end of the first blind hole (4) and the second friction surface (3), and/or a sensor (12) is provided which determines the thickness of the brake disc material between the end of the second blind hole (6) and the first friction surface (2).

10. Brake system according to claim 9, **characterized in that**
a. the sensor (12) is an optical sensor, and/or that
b. the sensor comprises a light barrier, and/or that
c. the sensor (12) measures the amount of radiation, in particular of electromagnetic radiation, in particular of light, that is passing through the first blind hole (4) and the brake disc material between the end of the first blind hole (4) and the second friction surface (3), or through a first clearance hole which has been formed from the first blind hole due to wear abrasion, and/or that
d. the sensor (12) measures the amount of radiation, in particular of electromagnetic radiation, in particular of light, passing through the second blind hole (6) and the brake disc material between the end of the second blind hole (6) and the first friction surface (2), or through a second clearance hole that has been formed from the second blind hole (6) due to wear abrasion, or that
e. the sensor (12) scans the surface of the first friction surface (2) or of the second friction surface (3) in a mechanical, capacitive or inductive manner.

11. Brake system according to one of the claims 9 or 10, **characterized in that**
a. the sensor (12) is integrated in a system for monitoring brake disc wear, or is connected to a system for monitoring brake disc wear, and/or that
b. the sensor (12) and a system for monitoring brake disc wear use the same warning line and/or are assigned to the same warning line.

12. Brake system according to one of the claims 9 to 11, **characterized in that**
a. the sensor (12) and/or a system for monitoring brake disc wear are integrated in a system for monitoring brake pad wear, and/or
b. the sensor (12) and/or a system for monitoring brake disc wear are connected to a system for monitoring brake pad wear, and/or that
c. the sensor (12) and/or a system for monitoring brake disc wear use the same warning line as a system for monitoring brake pad wear.

13. Use of a checking means for checking the brake disc wear of a brake disc according to one of the claims 4 to 8, wherein the checking means is designed and designated to be inserted all the way to the stop into the first blind hole and/or the further blind hole and/or the clearance hole and/or the cascade of bores when the brake disc is in a resting state (1), in particular during a vehicle examination process, wherein the checking means comprises at least one marking, in particular a color marking and/or a scale from which the depth of penetration can be read as a measure for the wear.

14. Application according to claim 13, **characterized in that**
a. the checking means is designed as a test mandrel (16) with a test probe, and/or that
b. the checking means is designed as a test mandrel (16) with a conical test probe, and/or that
c. the checking means is designed as a test mandrel (16) with a test probe that comprises testing sections with diameters that are decreasing towards the free end.

15. System, comprising a brake disc (1) having an opening according to one of the claims 4 to 8 and a checking means which can be inserted into the opening and which is suitable for use according to claim 13 or 14, and which can be inserted into the opening all the way to the stop to different depths, depending on the degree of wear of the brake disc (1).

## Revendications

1. Procédé de vérification de l'usure d'un disque de frein (1) qui présente au moins un trou borgne (4, 6) qui se termine à l'intérieur du disque de frein (1) à une distance d'une surface de frottement (2, 3) qui est plus petite ou égale à l'abrasion maximale admissible d'usure de la surface de frottement (2, 3), **caractérisé en ce que** l'épaisseur du matériau du disque de frein entre l'extrémité du trou borgne (4, 6) et la surface de frottement (2, 3) est déterminée.

2. Procédé selon la revendication 1, **caractérisé en ce que** l'amplitude de la traversée d'un rayonnement, en particulier d'un rayonnement électromagnétique et en particulier de lumière, à travers le trou borgne (4, 6) et le matériau du disque de frein entre l'extrémité du trou borgne (4, 6) et la surface de frottement (2, 3) est mesurée par un trou de passage formé à partir du trou borgne (4, 6) par l'abrasion provoquée par l'usure.

3. Procédé selon l'une des revendications 1 ou 2, **caractérisé en ce que**
a. l'épaisseur du matériau du disque de frein et/ou l'amplitude de la traversée du rayonnement sont mesurées à l'aide d'un capteur,
b. **en ce que** l'épaisseur du matériau du disque de frein et/ou l'amplitude de la traversée du rayonnement sont mesurées par un capteur, le capteur (12) travaillant et/ou étant activé automatiquement et/ou en continu et/ou à des intervalles prédéterminés ou prédéterminables, et/ou
c. **en ce que** l'épaisseur du matériau du disque de frein et/ou l'amplitude de la traversée d'un rayonnement sont mesurées par un capteur, le capteur (12) travaillant et/ou étant activé pendant que le disque de frein (1) tourne, en particulier en roulage sur un véhicule automobile équipé du disque de frein (1).

4. Disque de frein (1) doté d'une première surface de frottement (2) et d'une deuxième surface de frottement (3), le disque de frein (1) présentant au moins un premier trou borgne (4), en particulier un alésage borgne, le premier trou borgne partant de la première surface de frottement et se terminant à l'intérieur du disque de frein à une distance prédéterminée de la deuxième surface de frottement, la distance entre le premier trou borgne (4) et la deuxième surface de frottement (3) étant inférieure ou égale à l'abrasion maximale admissible due à l'usure de la deuxième surface de frottement (3), **caractérisé en ce que**
a. du premier trou borgne (4) part un deuxième trou borgne ou un trou de passage qui présentent un diamètre plus petit que le premier trou borgne et qui sont coaxiaux par rapport au premier trou borgne, ou
b. **en ce qu'**une cascade d'alésages de diamètre de plus en plus petit qui s'étendent dans la même direction que le premier trou borgne (4) part du premier trou borgne (4) ou
c. **en ce que** du premier trou borgne (4) part un autre trou de passage qui se rétrécit coniquement et qui est coaxial par rapport au premier trou borgne.

5. Disque de frein (1) selon la revendication 4, **caractérisé en ce que**
a. le disque de frein (1) présente au moins un deuxième trou borgne (6) qui part de la deuxième surface de frottement (3) et qui se termine à une distance prédéterminée de la première surface de frottement (2) ou
b. **en ce que** le disque de frein (1) présente au moins un deuxième trou borgne (6) et en particulier un deuxième alésage borgne qui part de la deuxième surface de frottement (3) et qui se termine à l'intérieur du disque de frein (1) à une distance prédéterminée de la première surface de frottement (2), la distance entre le deuxième trou borgne (6) et la première surface de frottement (2) étant inférieure ou égale à l'abrasion maximale admissible due à l'usure de la première surface de frottement (2).

6. Disque de frein (1) selon la revendication 5, **caractérisé en ce que**
a. du deuxième trou borgne (6) part un autre deuxième trou borgne ou un deuxième alésage de passage qui présentent un diamètre plus petit que le deuxième trou borgne et qui sont coaxiaux par rapport au deuxième trou borgne ou
b. **en ce que** du deuxième trou borgne (6) part une cascade de deuxièmes alésages de diamètre de plus en plus petit qui s'étendent dans la même direction que le deuxième trou borgne (4) ou
c. **en ce que** du deuxième trou borgne (6) part un autre deuxième alésage de passage qui se rétrécit coniquement ou un autre deuxième trou borgne qui se rétrécit coniquement et coaxial par rapport au deuxième trou borgne.

7. Disque de frein (1) selon l'une des revendications 5 ou 6, **caractérisé en ce que**
a. le premier trou borgne (4) et le deuxième trou borgne (6) présentent des écarts radiaux différents par rapport à l'axe de rotation du disque de frein ou
b. **en ce que** le premier trou borgne (4) et le deuxième trou borgne (6) présentent le même écart radial par rapport à l'axe de rotation du disque de frein.

8. Disque de frein (1) selon l'une des revendications 4 à 7, **caractérisé en ce que** le disque de frein (1) présente à l'intérieur au moins une cavité (7) et en particulier une cavité permettant une ventilation intérieure et **en ce que** le premier trou borgne (4) et/ou le deuxième trou borgne (6) traversent la cavité (7).

9. Installation de frein présentant un disque de frein (1) selon l'une des revendications 4 à 8, avec un capteur (12) qui détermine l'épaisseur du matériau du disque de frein entre l'extrémité du premier trou borgne (4) et la deuxième surface de frottement (3), et/ou un capteur (12) qui détermine l'épaisseur du matériau du disque de frein entre l'extrémité du deuxième trou borgne (6) et la première surface de frottement (2).

10. Installation de frein selon la revendication 9, **caractérisée en ce que**
a. le capteur (12) est un capteur optique, et/ou
b. **en ce que** le capteur présente une barrière lumineuse,et/ou
c. **en ce que** le capteur (12) mesure l'amplitude de la traversée d'un rayonnement, en particulier d'un rayonnement électromagnétique et en particulier de lumière, à travers le premier trou borgne (4) et le matériau du disque de frein entre l'extrémité du premier trou borgne (4) et la deuxième surface de frottement (3) ou dans un premier trou de passage formé part du premier trou borgne du à l'usure, et/ou
d. **en ce que** le capteur (12) mesure l'amplitude de la traversée d'un rayonnement, en particulier d'un rayonnement électromagnétique et en particulier de lumière, à travers le deuxième trou borgne (6) et le matériau du disque de frein entre l'extrémité du deuxième trou borgne (6) et la première surface de frottement (2) ou à travers un deuxième trou de passage formé dans le deuxième trou borgne (6) par l'abrasion due à l'usure ou
e. **en ce que** le capteur (12) palpe la surface de la première surface de frottement (2) ou de la deuxième surface de frottement (3) par des moyens mécaniques, capacitifs ou inductifs.

11. Installation de frein selon l'une des revendications 9 ou 10, **caractérisée en ce que**
a. le capteur (12) intégré dans un système de surveillance de l'usure des disques de frein et/ou est raccordé à un système de surveillance de l'usure des disques des freins et/ou
b. **en ce que** le capteur (12) et un système de surveillance de l'usure des disques de frein utilisent le même conducteur d'avertissement et/ou sont associés au même conducteur d'avertissement.

12. Installation de frein selon l'une des revendications 9 à 11, **caractérisée en ce que**
a. le capteur (12) et/ou un système de surveillance de l'usure des disques de frein sont intégrés dans un système de surveillance de l'usure d'une garniture de frein et/ou
b. **en ce que** le capteur (12) et/ou un système de surveillance de l'usure des disques de frein sont raccordés à un système de surveillance de l'usure des garnitures de frein et/ou
c. **en ce que** le capteur (12) et/ou un système de surveillance de l'usure des disques de frein utilisent le même conducteur d'avertissement qu'un système de surveillance de l'usure des garnitures de frein.

13. Utilisation d'un moyen de vérification permettant de vérifier l'usure d'un disque de frein selon l'une des revendications 4 à 8, le moyen de vérification étant configuré et défini pour, lorsque le disque de frein (1) est au repos, en particulier pendant une vérification du véhicule, être utilisé pour venir être placé dans le premier trou borgne, le deuxième trou borgne, le trou de passage et/ou la cascade d'alésages, le moyen de vérification présentant au moins un repère et en particulier un repère coloré et/ou une échelle sur laquelle la profondeur d'enfoncement peut être lue comme mesure de l'usure.

14. Utilisation selon la revendication 13, **caractérisée en ce que**
a. le moyen de vérification est configuré comme mandrin de vérification (16) doté d'une pointe de vérification,
b. **en ce que** le moyen de vérification est configuré comme mandrin de vérification (16) doté d'une pointe de vérification de forme conique et/ou
c. **en ce que** le moyen de vérification est configuré comme mandrin de vérification (16) doté d'une pointe de vérification qui présente des parties de vérification dont les diamètres diminuent en direction de l'extrémité libre.

15. Système constitué d'un disque de frein (1) avec une l'ouverture selon l'une des revendications 4 à 8 et d'un moyen de vérification convenant pour être utilisé selon les revendications 13 ou 14 et apte à être inséré dans l'ouverture, apte à être inséré dans l'ouverture jusqu'à une butée située à des profondeurs différentes selon l'état d'usure du disque de frein (1).
